# EUROPEAN PATENT APPLICATION

(11) **EP 2 908 505 A1**
(43) Date of publication of application: **19.08.2015**
(21) Application number: 13845709.8
(22) Date of filing: 09.10.2013
(51) Int. Cl.: H04M 1/00, G06F 3/048, G06F 3/0488

(54) **PORTABLE ELECTRONIC APPARATUS, AND CONTROL METHOD AND PROGRAM THEREOF**

(30) Priority: 10.10.2012 JP 2012224960
(71) Applicant: NEC Corporation, Tokyo 108-8001 (JP)
(72) Inventor: IMAI, Tetsuyoshi, Kodama-gun Saitama 367-0297 (JP)
(74) Representative: Vossius & Partner Patentanwälte Rechtsanwälte mbB
(86) International application number: PCT/JP2013/077473
(87) International publication number: WO 2014/057975

(57) **Abstract**

A method for changing the display magnification ratio using two fingers suffers a problem that the display magnification ratio cannot be changed with a single hand. With this in view, there is provided a mobile electronic apparatus in which the display magnification ratio can be changed with a single hand as the user's intention is observed. The mobile electronic apparatus includes a display unit, an operation unit that detects an operation via a touch panel, a distance measurement unit that measures the distance between a user and the mobile electronic apparatus as a user distance, and a controller, which controller changes the display magnification ratio of a picture represented on the display unit in response to changes in the user distance caused during the time the detection of a pressing point on the touch panel by the operation unit is going on.

## Description

### TECHNICAL FIELD

### (DESCRIPTION OF RELATED APPLICATION)

The present application asserts priority rights based on JP Patent Application No. 2012-224960 filed in Japan on October 10, 2012, the total contents thereof being incorporated by reference into the present Application.

This invention relates to a mobile electronic apparatus, a method for controlling the apparatus, and a program. In particular, it relates to a mobile electronic apparatus including a display unit, a method for controlling the apparatus and a program.

### BACKGROUND

Recently, mobile electronic apparatus, such as mobile phones, smartphones, tablet PCs (Personal Computers), digital cameras, digital video cameras, notebook PCs, game machines or PDAs (Personal Digital Assistants), are becoming popular. In most of these mobile electronic apparatus, there is provided a display unit which is as large in size as possible in order to present as much information as possible to the user to high efficiency. Also, in most of the mobile electronic apparatus, user's operations are accepted by GUI (Graphic User Interface) that makes use of a graphic display using a touch panel and a set of icons etc.

It is noted that an optimum size of the information represented on the display unit of the mobile electronic apparatus, such as letters/ characters or images, differs from user to user. For this reason, many of the mobile electronic apparatus are configured to provide for operations that allow the display magnification ratio to be changed as desired by the user.

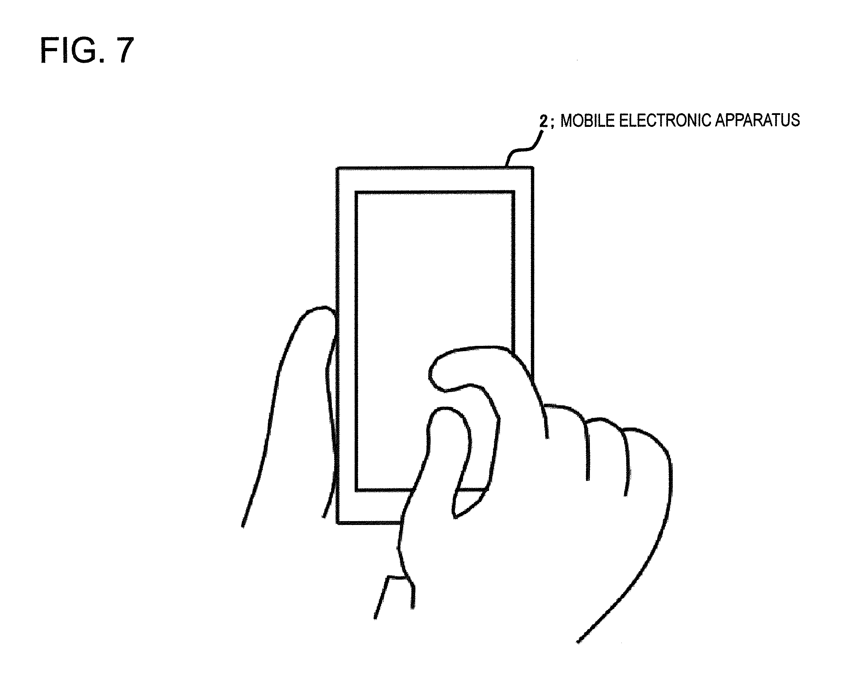

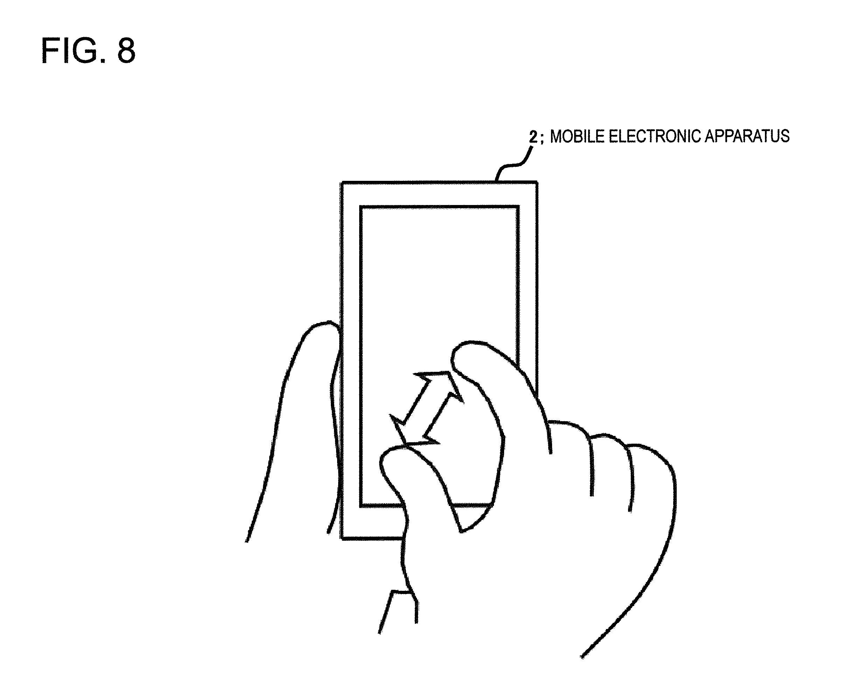

Fig.7 and Fig.8 depict schematic views for illustrating the operations of changing the display magnification ratio by the user. As example operations for changing the display magnification ratio by the user, it may be contemplated that the user puts his/her two fingers on the touch panel of a mobile electronic apparatus 2 and enlarges the interval between his/her two fingers to enlarge a display (see Fig.7 and Fig.8). Or, the user may contract the interval between his/her two fingers to contract the display (see Fig.8).

Patent Literature 1 discloses a technique of changing the display magnification ratio depending on a distance between the user and the mobile electronic apparatus.

### CITATION LIST

### PATENT LITERATURE

### Patent Literature 1:

JP Patent Kokai Publication No. JP2010-258603A

### SUMMARY

### TECHNICAL PROBLEM

The disclosures of the above mentioned related technical literatures are incorporated herein by reference. The following analysis is by the present inventors.

In the mobile electronic apparatus of these days, the tendency towards a larger screen size of the display unit is apparent, as mentioned above. For this reason, there is a need for providing a means for changing the display magnification ratio. However, if a user attempts to change the display magnification ratio with his/her two fingers, there is presented a problem that the magnification ratio cannot be changed with his/her single hand. That is, if desired to touch the panel with his/her two fingers, it is necessary to hold the mobile electronic apparatus with his/her other hand. However, if the user is within a railway car crowded with passengers, as an example, the mobile electronic apparatus can not necessarily be operated with both hands. Or, if the user is indoors and puts his/her mobile electronic apparatus on a desk, it is possible to change the display magnification ratio with his/her single hand. However, it may be said that the case of manipulating a mobile electronic apparatus placed on the disk may occur only on extremely rare occasions.

On the other hand, if the display magnification ratio is changed depending solely on the distance between the user and the mobile electronic apparatus, as stated in Patent Literature 1, there is a possibility that the magnification ratio is set to a value not conforming to the user's intention. If, for example, a picture of a photo is to be confirmed, and the user intends to grasp the photo's global appearance, but the mobile electronic apparatus automatically changes the magnification ratio, the result may be contrary to the user's intention.

It is an object of the present invention to provide a mobile electronic apparatus, a method for controlling it, and a program, which will help render it possible to change the display magnification ratio with the single hand of a user as the user's intention is observed.

### SOLUTION TO PROBLEM

In a first aspect according to the present invention, there is provided a mobile electronic apparatus including a display unit and an operation unit that detects an operation via a touch panel, in which the mobile electronic apparatus comprises a distance measurement unit that measures a distance between a user and the mobile electronic apparatus as a user distance and a controller that changes a display magnification ratio of a picture represented on the display unit in response to changes in the user distance caused during a detection of a pressing point on the touch panel by the operation unit is going on.

In a second aspect according to the present invention, there is provided a method for controlling a mobile electronic apparatus including a display unit and an operation unit that detects an operation via a touch panel, in which the method comprises a distance measurement step of measuring a distance between a user and the mobile electronic apparatus, as a user distance, and a display magnification ratio changing step of changing a display magnification ratio of a picture represented on the display unit in response to changes in the user distance caused during a detection of a pressing point on the touch panel by the operation unit is going on. The present invention is bound up with a particular machine which is a mobile electronic apparatus including a display unit and an operation unit that detects an operation via a touch panel.

In a third aspect according to the present invention, there is provided a program that is to be run on a computer controlling a mobile electronic apparatus including a display unit, an operation unit that detects an operation via a touch panel and a distance measurement unit that measures a distance between a user and the mobile electronic apparatus, as a user distance, in which the program executes processing of changing a display magnification ratio of a picture represented on the display unit in response to changes in the user distance caused during a detection of a pressing point on the touch panel by the operation unit is going on. The present program can be recorded on a computer-readable recording medium, which recording medium may be a non-transient one such as a semiconductor memory, a hard disc, a magnetic recording medium or an optical recording medium. The present invention may be implemented as a computer program product.

### ADVANTAGEOUS EFFECTS OF INVENTION

In the respective aspects of the present invention, it is possible to provide a mobile electronic apparatus, a method for controlling it, and a program, which will help render it possible to change the display magnification ratio with the single hand of a user as the user's intention is observed.

### BRIEF DESCRIPTION OF THE DRAWINGS

Fig.1 is a schematic block diagram for illustrating an exemplary embodiment.
Fig.2 is a front view showing a mobile electronic apparatus 1 according to an exemplary embodiment 1.
Fig.3 is a block diagram showing an example inner configuration of the mobile electronic apparatus 1.
Fig.4 is a schematic front view for illustrating an example use style of the mobile electronic apparatus 1 by a user.
Fig.5 is a schematic view for illustrating an operation of changing the display magnification ratio by the user.
Fig.6 is a flowchart for illustrating an example operation of the mobile electronic apparatus 1.
Fig.7 is a schematic view for illustrating the operation of changing the display magnification ratio by a user.
Fig.8 is another schematic view for illustrating the operation of changing the display magnification ratio by a user.

### DESCRIPTION OF EMBODIMENTS

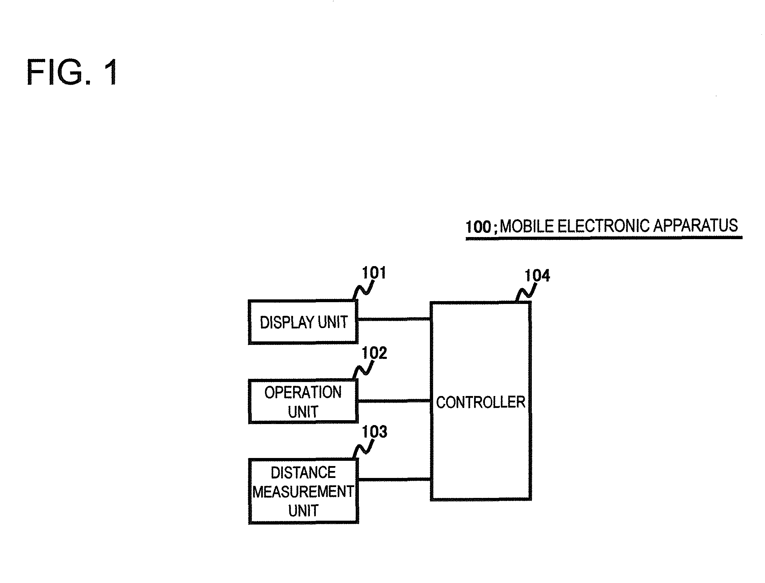

Initially, a summary of a preferred mode of the present invention will be described with reference to Fig.1. It is noted that symbols are entered in the following summary only as examples to assist in understanding and are not intended to limit the present invention to the mode illustrated.

As stated above, there is a general demand for a mobile electronic apparatus in which the display magnification ratio can be changed with a single hand of a user, as the user's intention is observed.

With this in view, there is provided a mobile electronic apparatus 100, shown in Fig.1, as an example. The mobile electronic apparatus 100 includes a display unit 101, an operation unit 102 that detects an operation via a touch panel, a distance measurement unit 103 that measures a distance between a user and the mobile electronic apparatus, as a user distance, and a controller 104. It is noted that the controller changes a display magnification ratio of a picture represented on the display unit 101 in response to changes in the user distance caused during a detection of a pressing point on the touch panel by the operation unit 102 is going on.

The mobile electronic apparatus 100 decides the display magnification ratio of the picture represented on the display unit 101 based on the user distance as measured by the distance measurement unit 103. At this time, the display magnification ratio is not changed except if the user continues his/her operation via the operation unit 102 by keeping on pressing the touch panel. That is, the mobile electronic apparatus 100 changes the display magnification ratio of the picture represented on the display unit 101 in accordance with the user's intention.

On the other hand, it is only necessary for the user to perform the operation of changing the user distance as he/she presses a point on the touch panel, while it is unnecessary for the user to use his/her two fingers to change the display magnification ratio. Hence, there may be provided a mobile electronic apparatus in which the display magnification ratio can be changed with the single hand of the user as the user's intention is observed.

Additionally, the following modes are also possible.

### [Mode 1]

The mobile electronic apparatus according to the above mentioned first aspect.

### [Mode 2]

Preferably, the controller transfers, when the user presses the touch panel for longer than a preset time, to a display magnification ratio change mode that enables changing the display magnification ratio.

### [Mode 3]

Preferably, the controller cancels the display magnification ratio change mode when the touch panel is released from pressing by the user.

### [Mode 4]

Preferably, the controller transfers to the display magnification ratio change mode when a force not less than a preset force has been applied to the pressing point on the touch panel.

### [Mode 5]

Preferably, the distance measurement unit includes a camera module capable of shooting a picture.

The distance measurement unit extracts, from a picture shot by the camera module, an area of the picture equivalent to a face of the user as a face picture, and measures the user distance based on changes in the size of the face picture.

### [Mode 6]

Preferably, the distance measurement unit includes an infrared sensor and measures the user distance based on an output of the infrared sensor.

### [Mode 7]

Preferably, the distance measurement unit includes an acceleration sensor, and the controller changes the display magnification ratio based on a direction or a distance of movement as obtained from an output of the acceleration sensor.

### [Mode 8]

The method for controlling the mobile electronic apparatus according to the above mentioned second aspect.

### [Mode 9]

Preferably, the method for controlling the mobile electronic apparatus further comprises a step of transferring to the display magnification ratio change mode that enables changing the display magnification ratio when the user presses the touch panel for longer than a preset time.

### [Mode 10]

Preferably, the method for controlling the mobile electronic apparatus further comprises a step of canceling the display magnification ratio change mode when the touch panel has been released from pressing on the touch panel by the user.

### [Mode 11]

The program according to the above mentioned third aspect.

### [Mode 12]

Preferably, the program executes processing of transferring to the display magnification ratio change mode enabling changing of the display magnification ratio when the touch panel has been pressed by the user for longer than a preset time.

### [Mode 13]

Preferably, the program executes processing of canceling the display magnification ratio change mode when the touch panel has been released from pressing on the touch panel by the user.

In the following, more specified exemplary embodiments will be explained in detail with reference to the drawings.

### [Exemplary Embodiment 1]

An exemplary embodiment 1 of the present invention will now be described in detail with reference to the drawings.

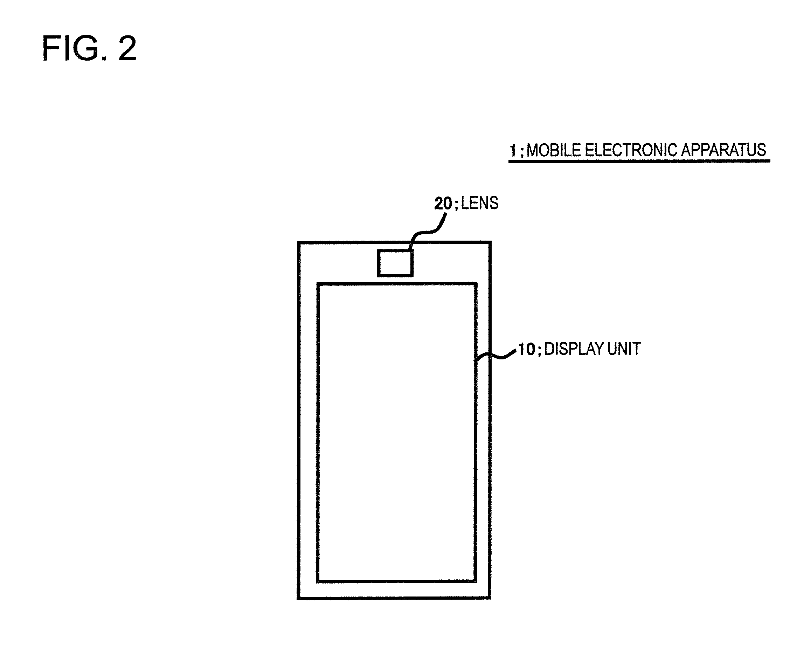

Fig.2 depicts an example front view showing a mobile electronic apparatus 1 according to the subject exemplary embodiment. The mobile electronic apparatus 1 includes a display unit 10 and a lens 20.

The display unit 10 includes a display panel, such as a liquid crystal panel, and provides a user with an as-shot picture, a menu presentation or the like.

The mobile electronic apparatus 1 has a camera function to permit shooting via a lens 20. The lens 20 is mounted so as to permit a user's face picture to be shot.

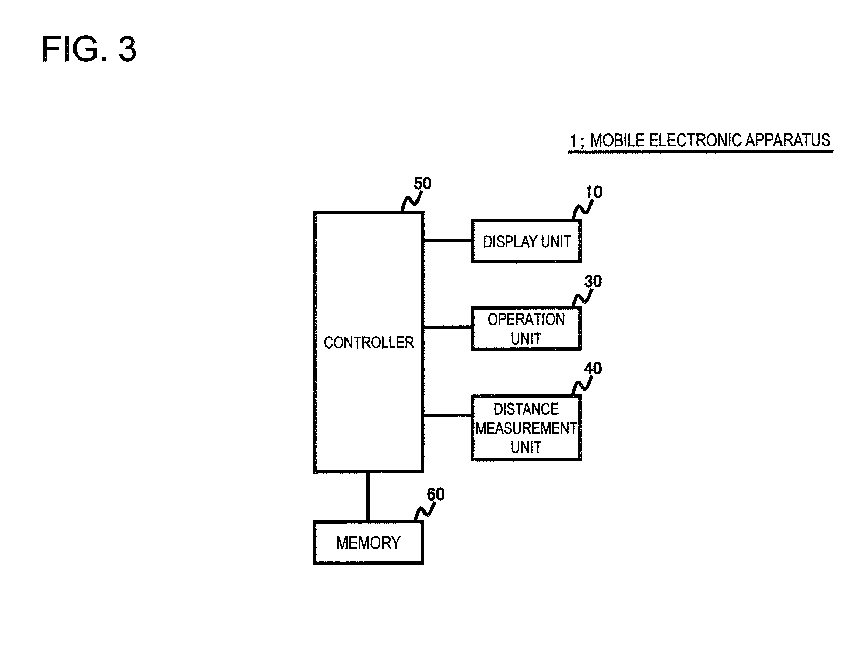

Fig.3 shows an example inner configuration of the mobile electronic apparatus 1.

The mobile electronic apparatus 1 includes the display unit 10, an operation unit 30, a distance measurement unit 40, a controller 50 and a memory 60. For simplicity sake, there are shown in Fig.3 only those modules pertinent to the mobile electronic apparatus 1 of the subject exemplary embodiment.

The display unit 10 is configured as described above and further explanation is dispensed with.

The operation unit 30 accepts operations made by a user on the mobile electronic apparatus 1. More specifically, the operation unit 30 includes a touch panel and a driver actuating the touch panel. The operation unit 30 informs the controller 50 about a location of the touch panel touched by the user. By the way, the touch panel may be of any of a variety of known system sorts including a capacitance measurement system. For example, a proximity detection touch panel, detecting the proximity of an object, such as a user's finger, may be used.

The distance measurement unit 40 includes a camera module configured by the lens 20 and shooting elements, not shown, etc. The distance measurement unit 40 shoots a picture inclusive of a user's face and measures the distance between the user and the mobile electronic apparatus 1 (the user distance mentioned above) from the as-shot picture. More specifically, the distance measurement unit 40 extracts, from the as-shot picture, an area of the picture corresponding to a user's face, and calculates the size of the picture of the user's face extracted. It is noted that the mobile electronic apparatus 1 includes a menu in which, directly after the user has purchased the mobile electronic apparatus 1, the user shoots his/her own face twice at respective different distances. In more detail, in the present menu, the user shoots his/her face twice, that is, first at a certain distance between the user and the mobile electronic apparatus 1 as a first distance, then at another distance between the user and the mobile electronic apparatus 1 as a second distance. Providing that the first and second distances are of values prescribed at the outset for the mobile electronic apparatus 1, it is possible to establish the correlation between changes in the distance and changes in the face picture. The distance measurement unit 40 fits the size of the extracted face picture to the correlation in order to find the user distance. The distance measurement unit 40 outputs the so measured user distance to the controller 50.

The controller 50 globally controls the mobile electronic apparatus 1, while also controlling respective components shown in Fig.3. The memory 60 stores the information necessary for the operation of the controller 50 and the as-shot pictures etc. By the way, the controller 50 may be implemented by a computer program that causes a computer on board the mobile electronic apparatus 1 to perform the processing of the controller 50, as later described in detail, using the computer's hardware.

The operation of the mobile electronic apparatus 1 will now be explained.

In the following explanation of the operation of the mobile electronic apparatus 1, it is assumed that the user performs an operation of zooming in or zooming out a picture demonstrated on the display unit 10.

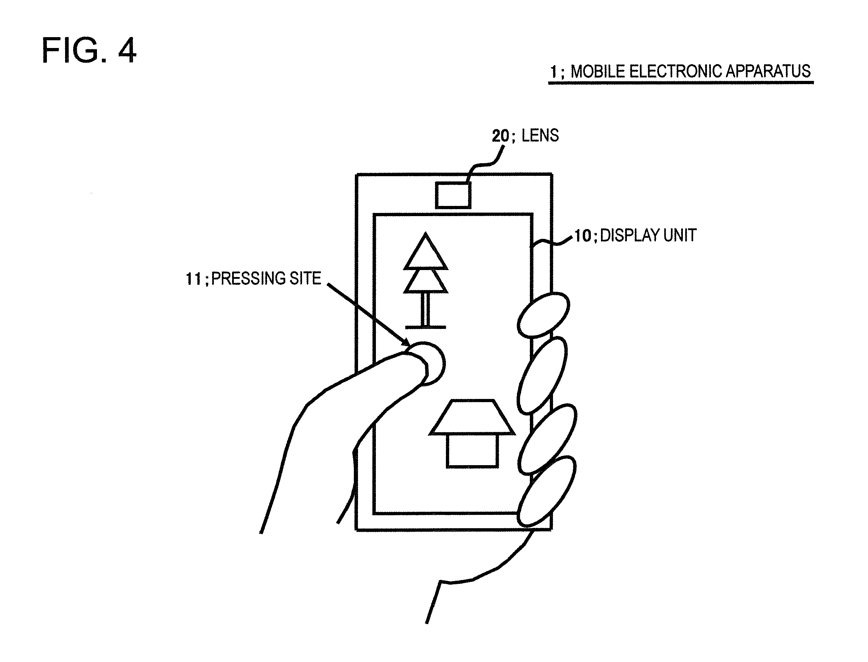

Fig.4 shows an example of the manner of using the mobile electronic apparatus 1 by the user.

If the user wishes to zoom in the picture displayed, he/she presses a median point 11 of an area to be zoomed in for a time longer than a preset time interval. In Fig.4, the pressed median point 11 is assumed to be a center point of the area of the picture desired to be zoomed in by the user.

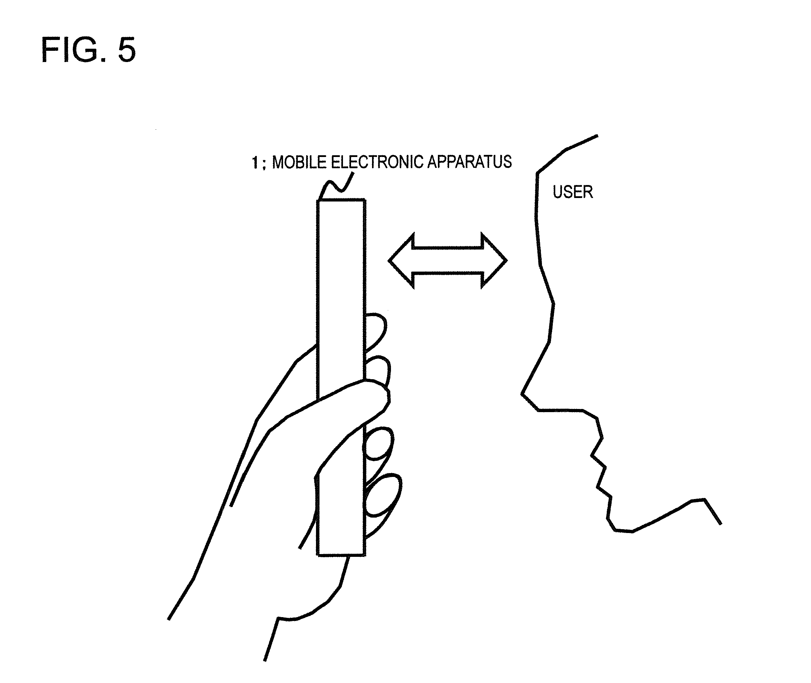

Should there be any location of the mobile electronic apparatus 1 that is pressed for longer than the preset time interval, the mobile electronic apparatus 1 transfers from an ordinary operation mode to a display magnification ratio change mode. By the ordinary operation mode is meant the operation mode possessed by the mobile electronic apparatus 1, such as an application actuating mode or a menu display mode. At the time of the transfer to the display magnification ratio change mode, the mobile electronic apparatus 1 may display for the user a message such as 'the operation mode has been set to the display magnification ratio change mode'. The user then performs an operation to move the mobile electronic apparatus 1 in a direction towards or away from his/her face (see Fig.5).

The mobile electronic apparatus 1 changes the display magnification ratio depending on the user distance as measured by the distance measurement unit 40. More specifically, if the user distance becomes shorter, the mobile electronic apparatus zooms in the picture represented on the display unit 10. Note that, if the picture represented on the display unit 10 is zoomed in, display is magnified in an area centered about the pressed median point 11.

If conversely the user distance should become longer, the picture represented on the display unit 10 is zoomed out. In zooming out the displayed picture, the zoom out ratio is decided depending on the distance between the user and the mobile electronic apparatus 1 without regard to the pressing location on the touch panel.

The operation of the respective components of the mobile electronic apparatus 1 at the time of changing the display magnification ratio will now be explained.

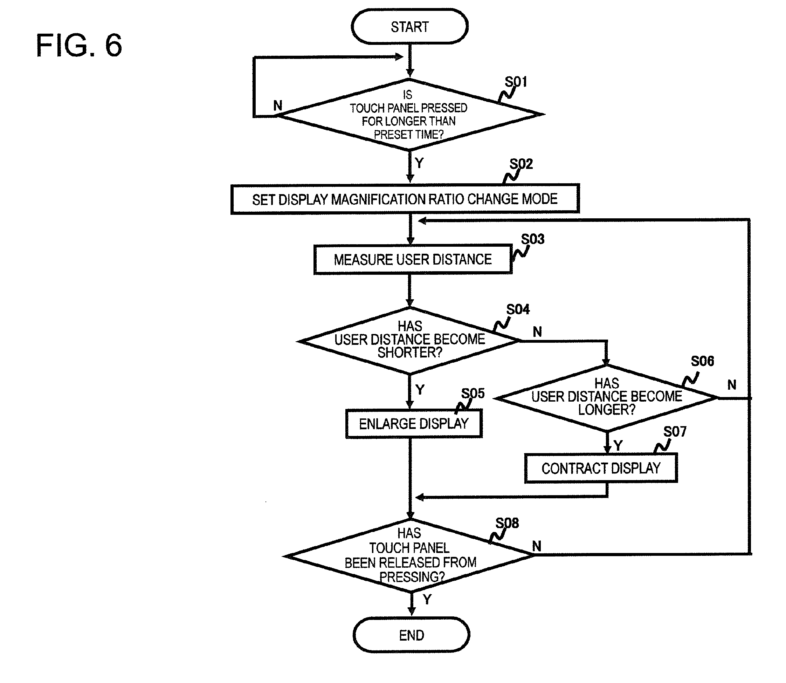

Fig.6 depicts a flowchart showing an example operation of the mobile electronic apparatus 1.

The controller 50 checks to see whether or not the touch panel has been pressed by the user for longer than a preset time (step S01). If the user has pressed the touch panel for longer than the preset time (Yes branching in a step S01), the controller 50 sets the operating mode at the display magnification ratio change mode (step S02). If the touch panel has not been pressed down by the user for longer than the preset time (No branching in the step S01), the check operation in the step S01 is continued.

In a step S03, the controller 50 gets a user distance from the distance measurement unit 40. By the way, the user distance is measured at a preset constant time interval by the distance measurement unit 40.

In a step S04, the controller 50 checks to see whether or not the user distance has become shorter. If the user distance has become shorter (Yes branching in the step S04), the controller 50 zooms in the picture represented on the display unit 10 (step S05).

In case the user distance has not become shorter (No branching in the step S04), the controller 50 verifies whether or not the user distance has become longer (step S06). If the user distance has become longer (Yes branching in the step S06), the controller 50 zooms out the picture represented on the display unit 10 (step S07).

In case the user distance has not become longer (No branching in the step S06), the processing as from the step S03 is continued.

In a step S08, the controller 50 checks to see whether or not the touch panel has been released from the pressing by the user. In case the touch panel has been released from the pressing (Yes branching in the step S08), the controller 50 cancels the display magnification ratio change mode to transfer to the ordinary mode. In case the touch panel has not been released from the pressing (No branching in the step S08), the processing as from the step S03 is continued.

In the mobile electronic apparatus 1 of the subject exemplary embodiment, the display magnification ratio of the picture represented on the display unit 10 is decided, as described above, on the basis of the distance between the user and the mobile electronic apparatus 1 (user distance). In this case, the operation mode does not transfer to the display magnification change mode except if the user presses the touch panel for longer than a preset time. It is thus possible to avoid a situation in which the display magnification ratio of the picture represented on the display unit 10 is changed automatically to the disregard of the user's intention.

On the other hand, it is only necessary for the user to perform the operation of moving the mobile electronic apparatus 1 towards or away from him/her as he/she keeps on pressing a certain point on the touch panel, while it is unnecessary for him/her to change the display magnification ratio using his/her two fingers. Hence, the user of the mobile electronic apparatus 1 is able to change the display magnification ratio of the picture represented on the display unit 10 without the necessity of performing complicated or onerous manipulations.

If the user attempts to zoom in the picture represented on the display unit 10 using his/her two fingers, there is possibility that the center point of an area desired to be zoomed in cannot be correctly recognized by the touch panel, with the result that a site offset from the target site is zoomed in. Or, there is a possibility that, depending on the performance of the touch panel, the positions of the two fingers cannot be sufficiently recognized so that only the position of one of the fingers is recognized. In such case, the user's operation may be recognized as if his/her single finger is pointing to a target site. This may a cause problem that the position of the picture portion desired to be zoomed in becomes offset and thus shifts to a position indicated by the user's sole finger recognized.

With the mobile electronic apparatus 1 according to the subject exemplary embodiment, it is only sufficient for the user to move the mobile electronic apparatus 1 towards him/her as he/she keeps on pressing a center point of an area desired to be zoomed in. Hence, picture zoom in may occur about a point intended by the user to be the zoom in center point.

In this manner, with the use of the mobile electronic apparatus 1 according to the subject exemplary embodiment, the display magnification ratio may be changed as the user's intention is observed.

### [Modifications]

Certain possible modifications of the mobile electronic apparatus 1 according to the exemplary embodiment 1 will now be explained.

In the mobile electronic apparatus 1, the operation mode transfers to the display magnification ratio change mode in case the user presses the touch panel for longer than a preset time interval, by what is called press and hold of the touch panel. Alternatively, if the touch panel of the operation unit 30 is capable of detecting the pressure applied to the pressing point, it is possible for the mobile electronic apparatus to transfer to the display magnification ratio change mode when a force not less than a preset force is applied to the pressing point on the touch panel.

It is also possible for the distance measurement unit 40 to make direct measurement of the user distance, using a distance sensor, such as infrared sensor, in place of measuring the user distance based on a picture acquired by a camera module.

Alternatively, if the distance measurement unit 40 of the mobile electronic apparatus 1 includes an acceleration sensor, the display magnification ratio can be changed in response to the direction or distance of movement of the mobile electronic apparatus 1. In such case, a user may put his/her finger on a site on the display screen desired to be zoomed in and the operation may then be switched between zoom in and zoom out on the assumption that, for example, leftward finger movement brings about zoom in and rightward finger movement zoom out.

The disclosure of the above mentioned Patent Literature is to be incorporated herein by reference. The exemplary embodiments or Examples may be modified or adjusted within the concept of the total disclosures of the present invention, inclusive of claims, based on the fundamental technical concept of the invention. A wide variety of combinations or selections of elements herein disclosed (elements of claims, Examples and drawings) may be made within the context of the claims of the present invention. That is, the present invention may include a wide variety of changes or corrections that may occur to those skilled in the art in accordance with the total disclosures inclusive of the claims and the drawings as well as the technical concept of the invention.

### REFERENCE SIGNS LIST

- 1, 2, 100: mobile electronic apparatuses
- 10, 101: display units
- 11: pressing point
- 20: lens
- 30, 102: operation units
- 40, 103: distance measurement units
- 50, 104: controllers
- 60: memory

## Claims

1. A mobile electronic apparatus, including
a display unit, and
an operation unit that detects an operation via a touch panel; the mobile electronic apparatus, comprising:
a distance measurement unit that measures a distance between a user and the mobile electronic apparatus as a user distance; and
a controller that changes a display magnification ratio of a picture represented on the display unit in response to changes in the user distance caused during a detection of a pressing point on the touch panel by the operation unit is going on.

2. The mobile electronic apparatus according to claim 1, wherein,
when the user presses the touch panel for longer than a preset time, the controller transfers to a display magnification ratio change mode that enables changing the display magnification ratio.

3. The mobile electronic apparatus according to claim 2, wherein,
the controller cancels the display magnification ratio change mode when the touch panel is released from pressing by the user.

4. The mobile electronic apparatus according to claim 2 or 3, wherein,
the controller transfers to the display magnification ratio change mode when a force not less than a preset force has been applied to the pressing point on the touch panel.

5. The mobile electronic apparatus according to any one of claims 1 to 4, wherein,
the distance measurement unit includes a camera module capable of shooting a picture;
the distance measurement unit extracting, from the picture shot by the camera module, an area of the picture equivalent to a face of the user, as a face picture, and measuring the user distance based on changes in the size of the face picture.

6. The mobile electronic apparatus according to any one of claims 1 to 4, wherein,
the distance measurement unit includes an infrared sensor and measures the user distance based on an output of the infrared sensor.

7. The mobile electronic apparatus according to any one of claims 1 to 4, wherein,
the distance measurement unit includes an acceleration sensor;
the controller changing the display magnification ratio based on a direction or a distance of movement as obtained from an output of the acceleration sensor.

8. A method for controlling a mobile electronic apparatus including
a display unit; and
an operation unit that detects an operation via a touch panel; the method comprising:
a distance measurement step of measuring a distance between a user and the mobile electronic apparatus as a user distance, and
a display magnification ratio changing step of changing a display magnification ratio of a picture represented on the display unit in response to changes in the user distance caused during a detection of a pressing point on the touch panel by the operation unit is going on.

9. The method for controlling the mobile electronic apparatus according to claim 8, further comprising
a step of transferring to the display magnification ratio change mode that enables changing the display magnification ratio when the user presses the touch panel for longer than a preset time.

10. A program that is to be run on a computer controlling a mobile electronic apparatus including
a display unit;
an operation unit that detects an operation via a touch panel; and a distance measurement unit that measures a distance between a user and the mobile electronic apparatus as a user distance; wherein,
the program executes processing of changing a display magnification ratio of a picture represented on the display unit in response to changes in the user distance caused during a detection of a pressing point on the touch panel by the operation unit is going on.
